# EUROPEAN PATENT APPLICATION

(11) **EP 3 104 348 A1**
(43) Date of publication of application: **14.12.2016**
(21) Application number: 16173399.3
(22) Date of filing: 07.06.2016
(51) Int. Cl.: G07G 1/00, A47F 9/00, G06Q 20/20

(54) **CHECKOUT SYSTEM INCLUDING A REGISTER MACHINE AND ONE OR MORE PAYMENT MACHINES**

(30) Priority: 10.06.2015 JP 2015117337
(71) Applicant: Toshiba TEC Kabushiki Kaisha, Tokyo 141-0032 (JP)
(72) Inventor: KAKINO, Tomonari, Shinagawa-ku, Tokyo 141-8562 (JP)
(74) Representative: Takeuchi, Maya

(57) **Abstract**

A checkout system includes a register machine and a payment machine. The register machine includes a scanner configured to scan a product code on each of one or more products, a communication interface, and a processor configured to control the communication interface to transmit a transaction ID that is based on a customer code read from a medium carried by a customer before transmitting all of one or more product IDs corresponding to one or more scanned product codes. The payment machine is separate from the register machine and includes a code reader configured to read the customer code in the medium, and a processor configured to start retrieving said one or more product IDs in response to reading of the customer code by the code reader and to carry out payment processing based on said one or more product IDs.

## Description

### FIELD

Embodiments described herein relate generally to a checkout system, in particular, a checkout system including a register machine and one or more payment machines.

### BACKGROUND

According to a type of semi-self-checkout system, registration of merchandise (products) to be purchased and payment for the merchandise in retailers such as a supermarket and the like are respectively performed in a merchandise registration machine (register machine) and a checkout (payment) machine which are separate from each other. In such a semi-self-checkout system, typically, an employee (checker) performs an operation of the merchandise registration machine and a shopper (customer) performs an operation of the checkout machine.

In the semi-self-checkout system, registration information of merchandise is transmitted to the checkout machine from the merchandise registration machine after the registration of merchandise completes, so that the shopper can complete payment using the checkout machine.

According to the semi-self-checkout system, since the employee (checker) can perform registration of merchandise for a next shopper without completing processing for the payment of a current shopper, it is possible to reduce shoppers' waiting time for the merchandise registration and also work load of the employee.

Generally, a time required for the payment tends to be longer than a time required for registering merchandise. For example, a shopper may need to take out cash from a wallet or show a coupon for a discount on the merchandise. In light of this tendency, it is desirable to carry out more efficient checkout processing for each shopper.

To this end, there is provided a checkout system, comprising:
- a register machine including,
   a scanner configured to scan a product code on each of one or more products to be purchased in a transaction,
   a communication interface, and
   a processor configured to control the communication interface to transmit a transaction ID that is based on a customer code read from a medium carried by a customer before transmitting all of one or more product IDs corresponding to one or more scanned product codes; and
- a payment machine separate from the register machine and including,
   a code reader configured to read the customer code in the medium, and
   a processor configured to start retrieving the one or more product IDs in response to reading of the customer code by the code reader and carry out payment processing based on the one or more product IDs.

Preferably, the communication interface is configured to transmit the transaction ID and said one or more product IDs to a computer connected to the register machine and the payment machine, such that the transaction ID and the one or more product IDs are stored in the computer in association with each other, and
the processor of the payment machine retrieves the one or more product IDs from the computer.

Preferably still, the register machine further includes a data writer configured to write the transaction ID in the medium, and the code reader is further configured to read the transaction ID written in the medium.

Preferably yet, the processor of the register machine is configured to separately transmit each of said one or more product IDs each time a corresponding product code is scanned.

Alternatively, the processor of the register machine is configured to collectively transmit all of said one or more product IDs.

Suitably, the communication interface is configured to transmit the transaction ID before transmitting any of the one or more product IDs.

Suitably still, the processor of the register machine is further configured to control the communication interface to respond to a command operation from a user by transmitting a signal indicating that all of the one or more product IDs have been transmitted.
Suitably yet, the register machine further includes a display, and the processor of the register machine is further configured to control the display to respond to issuance of the transaction ID by displaying a message indicating that the transaction ID has been issued.

Suitably yet, the processor of the register machine is further configured to control the communication interface to transmit a signal indicating that all of said one or more product IDs have been transmitted, in response to a command operation by a user.

Typically, the register machine further includes a display, and the processor of the register machine is further configured to control the display to display a message indicating that the transaction ID has been issued, in response to issue of the transaction ID.

Typically still, the checkout system further comprises a printer, wherein
the processor configured to control the communication interface comprises controlling the printer to print a transaction code of the transaction on a sheet;
the code reader configured to read the customer code in the medium comprises reading the transaction code on the sheet; and
the processor configures to start retrieving said one or more products IDs in response to reading of the customer code comprises reading of the transaction code.

Typically yet, the transaction ID comprises the transaction code.

The invention also relates to a checkout system comprising:
a register machine; and
a plurality of payment machines, each of which is configured to carry out payment processing, wherein
the register machine includes
   a scanner configured to scan a product code on each of one or more products to be purchased in a transaction, and
   a processor configured to select a payment machine in response to issue of a transaction ID of the transaction, and to cause the transaction ID to be transmitted to the selected payment machine, before all of one or more product IDs corresponding to one or more scanned product codes are transmitted to the selected payment machine.

Preferably, the processor is configured to select the payment machine based on a user selection thereof.

Preferably still, each of the one or more product IDs is configured to be separately transmitted each time a corresponding product code is scanned.

Alternatively, all of the one or more product IDs are configured to be correctively transmitted.

Preferably yet, the transaction ID is configured to be transmitted before any of said one or more product IDs is transmitted.

### DESCRIPTION OF THE DRAWINGS

The above and other objects, features and advantages of the preset invention will be made apparent from the following description of the preferred embodiments, given as non-limiting examples, with reference to the accompanying drawings, in which:
FIG. 1 illustrates an arrangement example of a merchandise sales data processing apparatus in a checkout system according to an embodiment.
FIG. 2 is a block diagram illustrating a configuration of the checkout system (merchandise sales data processing system) according to the embodiment.
FIG. 3 is a block diagram illustrating a configuration of a merchandise registration machine according to the embodiment.
FIG. 4 is a block diagram illustrating a configuration of a checkout machine according to the embodiment.
FIG. 5 is a flowchart illustrating an operation of the merchandise registration machine according to the embodiment.
FIG. 6 is a flowchart illustrating an operation of the checkout machine according to the embodiment.
FIG. 7 illustrates a time required for performing registration processing and checkout processing in the merchandise sales data processing apparatus according to the embodiment.

### DETAILED DESCRIPTION

A merchandise sales data processing apparatus is described herein which can reduce time required for a checkout process.

In general, according to an embodiment, a checkout system includes a register machine and a payment machine. The register machine includes a scanner configured to scan a product code on each of one or more products to be purchased in a transaction, a communication interface, and a processor configured to control the communication interface to transmit a transaction ID that is based on a customer code read from a medium carried by a customer, before the communication interface transmits all of one or more product IDs corresponding to one or more scanned product codes. The payment machine is separate from the register machine and includes a code reader configured to read the customer code from the medium, and a processor configured to start retrieving said one or more product IDs in response to reading of the customer code by the code reader and to carry out payment processing based on said one or more product IDs.

Hereinafter, an embodiment will be described with reference to the drawings. A merchandise sales data processing system according to the embodiment is realized, for example, as a checkout system installed in a store such as a supermarket. The checkout system (merchandise sales data processing system) includes at least one merchandise registration machine, at least a checkout machine (payment machine), and a store computer (store server). The store computer (store server) is connected to the merchandise registration machine and the checkout machines through a network. The merchandise registration machine and the checkout machine may be configured as a merchandise sales data processing apparatus.

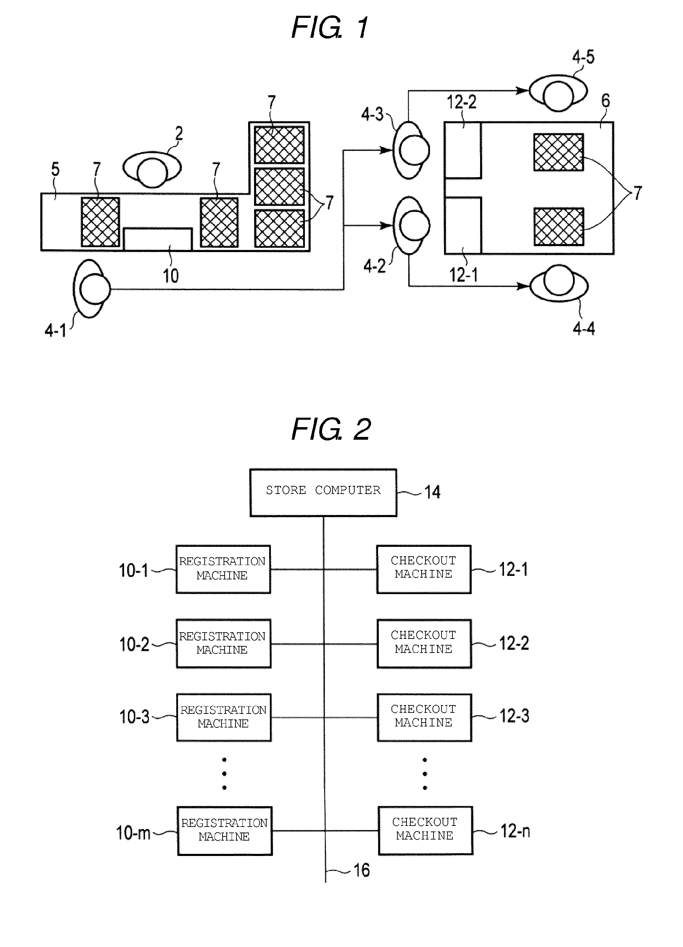

FIG. 1 illustrates an arrangement example of the merchandise sales data processing apparatus (a merchandise registration machine and a plurality of checkout machines) in the checkout system according to the present embodiment. In FIG. 1, one merchandise registration machine (register machine) 10 is located at a merchandise registration counter, and two checkout machines (payment machines) 12 (12-1 and 12-2) are located at a checkout counter.

The merchandise registration machine 10 is a device for registering information of merchandise that a shopper 4 (4-1) is going to purchase and for generating registration information. In the merchandise registration machine 10, a registration operation of merchandise is operated by an employee of the store, which is referred to as a checker 2. The merchandise registration machine 10 may include a function of executing checkout processing (payment processing) based on the registration information, in accordance with an operation of the checker 2, similarly to the checkout machine 12.

The checkout machine 12 is a device for receiving the registration information which is generated by the merchandise registration machine 10, and for performing the checkout processing based on the received registration information. The checkout machines 12 (12-1, 12-2) are operated by shoppers 4 (4-2, 4-3). The checkout machine 12 may be operated by the checker 2.

The merchandise registration machine 10 is attached to a counter table 5. The counter table 5 includes an L-shaped top board, for example. If a shopping basket 7 of merchandise is placed on the counter table 5 by the shopper 4-1, the checker 2 performs a scan operation on the merchandise in the shopping basket 7 (performs a reading operation of information on the merchandise).

In the merchandise sales data processing apparatus according to the present embodiment, before registration processing by merchandise registration machine 10 is completed, the shopper 4-1 may move to the checkout machine 12 and cause the checkout machine 12-1 to start checkout processing. The checker 2 places the shopping baskets 7 for which the registration processing has been completed, at a side of the counter table 5 near the checkout machine 12, so that the shoppers 4-2 and 4-3 moving towards the checkout machine 12 can easily take the shopping baskets 7.

The checkout machine 12 is attached to a bagging table 6, for example. The bagging table 6 is located near the counter table 5 to which the merchandise registration machine 10 is attached. FIG. 1 illustrates an example in which two checkout machines 12-1 and 12-2 are disposed.

As illustrated in FIG. 1, since the checkout machines 12-1 and 12-2 are disposed near the merchandise registration machine 10, the checker 2 may check if the shoppers 4-2 and 4-3 correctly operate the checkout machines 12-1 and 12-2, respectively.

In FIG. 1, the two checkout machines 12-1 and 12-2 are associated with the one merchandise registration machine 10. Alternatively, three or more checkout machines 12 may be associated with the one merchandise registration machine 10. A combination of the merchandise registration machine 10 and the checkout machine 12 may be non-exclusive. That is, one or any of a plurality of checkout machines 12 may perform the checkout processing on registration information generated by each of a plurality of merchandise registration machines 10.

FIG. 2 is a block diagram illustrating a configuration of the checkout system (merchandise sales data processing system) according to the present embodiment.

In FIG. 2, a plurality (m) of merchandise registration machines 10-1, ..., and 10-m, and a plurality (n) of checkout machines 12-1, ..., and 12-n are provided. The merchandise registration machines 10-1, ..., and 10-m, the checkout machines 12-1, ..., and 12-n, and a store computer (server) 14 are connected to each other through a network 16 such as a local area network (LAN), and can communicate data with each other.

The store computer 14 manages all of the merchandise registration machines 10 and the checkout machines 1 in the checkout system. The store computer 14 receives registration information generated by the merchandise registration machines 10 (10-1,..., and 10-m), and transmits the received registration information to any of the checkout machines 12 (12-1, ..., and 12-n) which executes the checkout processing.

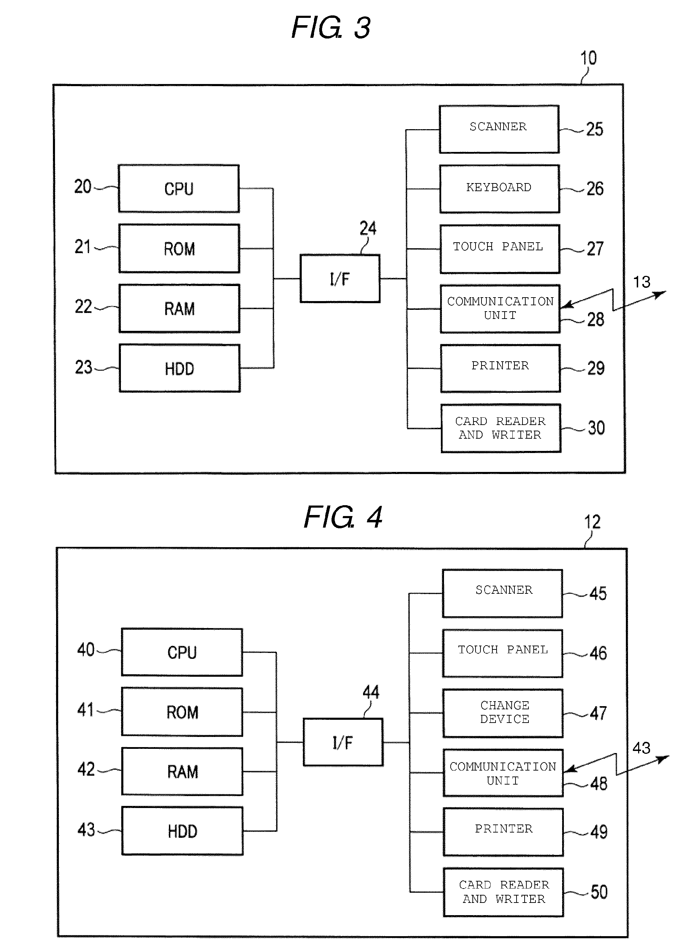

FIG. 3 is a block diagram illustrating a configuration of the merchandise registration machine 10 (10-1,..., and 10-m) according to the present embodiment.

The merchandise registration machine 10 includes a central processing unit (CPU) 20, a read-only memory (ROM) 21, a random-access memory (RAM) 22, a hard disk drive (HDD) 23, an interface (I/F) unit 24, a scanner 25, a keyboard 26, a touch panel 27, a communication unit 28, a printer 29, and a card reader and writer 30.

The CPU 20 controls each unit of the merchandise registration machine 10 to conduct various operations based on an operating system, middleware, and an application program which are stored in the ROM 21 and the RAM 22.

Data referred to by the CPU 20 when the CPU 20 performs various types of processing are also stored in the ROM 21 and the RAM 22, as well as various programs executed by the CPU 20. When registering information of merchandise, a registration information list is generated in the RAM 22. In the registration information list, a transaction ID (details thereof will be described below) issued for purchase (transaction) of merchandise by the shopper 4, and registration information obtained based on information read from each piece of merchandise are associated with each other.

Programs executed by the CPU 20 include a control program. The control program is used for performing the following processing: inputting information (merchandise code and the like) of merchandise; generating registration information used in the checkout processing, using the information of merchandise; determining identification information (transaction ID) of one transaction (generally, purchase of merchandise by one shopper 4); checkout processing performed based on the registration information; and transmitting the registration information to the store computer 14 for recording in the store computer 14.

The HDD 23 serves as auxiliary storage of the merchandise registration machine 10. The HDD 23 stores data used when the CPU 20 performs various types of processing, or data generated by processing of the CPU 20. Instead of the HDD 23, for example, a solid state drive (SSD) and the like may be used.

The interface (I/F) unit 24 transfers data communicated among the CPU 20, the ROM 21, the RAM 22, and the HDD 23, and the scanner 25, the communication unit 28, the touch panel 27, the printer 29, and the card reader and writer 30. As the I/F unit 24, for example, a well-known I/F unit which includes various buses such as a system bus, and various interface circuits for connecting the buses and the above units may be used.

The scanner 25 reads information of merchandise by optical scanning, and inputs a merchandise code specific to the merchandise. The scanner 25 may be a fixed or mobile two-dimensional code scanner or a scanner that captures an image of the merchandise, so that the merchandise can be identified based on the captured image of the merchandise using an image recognition technology. As the scanner 25, one type, or more than one type, may be used.

The keyboard 26 has numeric keys for inputting an amount of money, a calculation key for performing calculation such as the subtotal and the grand total, keys for inputting various commands, merchandise keys to which plural pieces of merchandise may be assigned, and the like. The keyboard 26 outputs a command in response to an operation on each of the above-described keys.

The touch panel 27 includes a display device and a touch sensor. The display device displays a screen such as a graphical user interface (GUI) screen. For example, the display device displays the list of registration information (merchandise name, unit price, and the like) relating to merchandise which is registered as a purchase target, the subtotal, various types of menus, an object for inputting a command, and the like. As the display device, for example, a well-known device such as a color liquid crystal display (LCD) may be used. The touch sensor is disposed so as to overlap with a display surface of the display device. The touch sensor detects a touched position on the display surface of the display device by an operator, and transmits the detected position information to the CPU 20. As the touch sensor, a well-known device may be used.

The communication unit 28 performs communication between the store computer 14 and the checkout machine 12 through a LAN 13.

As the printer 29, for example, a thermal printer, a dot impact printer, or the like is used. The printer 29 prints various character strings, an image, a code pattern (two-dimensional code and the like), and the like on a sheet for a receipt, so as to issue a receipt and the like.

The card reader and writer 30 can read data recorded in a card and write data to the card. Various cards containing information related to checkout processing, such as a membership card, a point card, and a payment card, such as a credit card, a debit card, an electronic money card, and a prepaid card, can be used. The card reader and writer 30 may be a device of a magnetic type, a contact type, or a non-contact type. The card reader and writer 30 may include plural types of devices.

A display (for example, LCD) for providing the shopper 4 with various types of information may be provided in the merchandise registration machine 10.

FIG. 4 is a block diagram illustrating a configuration of the checkout machine 12 (12-1,..., and 12-n) according to the present embodiment.

The checkout machine 12 includes a CPU 40, a ROM 41, a RAM 42, a HDD 43, an interface (I/F) unit 44, a scanner 45, a touch panel 46, a change device 47, a communication unit 48, a printer 49, and a card reader and writer 50.

The CPU 40 controls each unit of the checkout machine 12 to conduct various operations, based on an operating system, middleware, and an application program, which are stored in the ROM 41 and the RAM 42.

Data referred to by the CPU 40 when the CPU 40 performs various types of processing are also stored in the ROM 41 and the RAM 42, as well as various programs executed by the CPU 40.

Programs executed by the CPU 40 include a control program for performing various types of processing. The various types of processing include, for example, checkout processing performed through an operation of the shopper 4 based on registration information. The registration information is generated through the registration processing carried out by the merchandise registration machine 10 and is received by the checkout machine 12. The checkout processing according to the present embodiment may be started before the registration processing by the merchandise registration machine 10 is completed.

The HDD 43 serves as auxiliary storage part of the checkout machine 12. The HDD 43 stores data used when the CPU 40 performs various types of processing, or data generated by processing of the CPU 40. Instead of the HDD 43, for example, a SSD and the like may be used.

The interface (I/F) unit 44 transfers data communicated among the CPU 40, the ROM 41, the RAM 42, and the HDD 43, and the scanner 45, the touch panel 46, the change device 47, the communication unit 48, the printer 49, and the card reader and writer 50. As the I/F unit 44, for example, a well-known I/F unit which includes various buses such as a system bus, and various interface circuits for connecting the buses and the above units may be used.

The scanner 45 reads information by optical scanning, and inputs a code. For example, the scanner 45 can be used for reading a code (for example, two-dimensional code) of a receipt printed by the printer 29 of the merchandise registration machine 10. A code which is issued by the merchandise registration machine 10 and indicates identification information (transaction ID) of one transaction (one shopper) is printed on the receipt. The scanner 45 may be a fixed or mobile two-dimensional code scanner, or a scanner that captures an image of the code, so that the transaction can be identified based on the captured image using an image recognition technology. As the scanner 45, only one type may be provided or plural types may be provided.

The touch panel 46 includes a display device and a touch sensor. The display device displays a certain screen such as a GUI screen. For example, the display device displays the list of registration information (merchandise name, unit price, and the like) relating to merchandise which is registered as a purchase target, the, various types of menus, an object for inputting a command, and the like. As the display device, for example, a well-known device such as a color liquid crystal display (LCD) may be used. The touch sensor is disposed so as to overlap with a display surface of the display device. The touch sensor detects a touched position on the display surface of the display device by an operator, and transmits the detected position information to the CPU 40. As the touch sensor, a well-known device may be used.

The change device 47 receives coins and bills which are inserted into the change device 47. The change device 47 discharges coins and bills which correspond to a change.

The communication unit 48 performs communication between the store computer 14 and the merchandise registration machine 10 through a LAN 43.

As the printer 49, for example, a thermal printer, a dot impact printer, or the like is used. The printer 49 prints various character strings, an image, or the like on a sheet for a receipt, so as to issue a receipt and the like.

The card reader and writer 50 can read data recorded in a card and write data to the card. Various cards containing information related to checkout processing, such as a membership card, a point card, and a payment card, such as a credit card, a debit card, an electronic money card, and a prepaid card, can be used. The card reader and writer 50 may be a device of a magnetic type, a contact type, or a non-contact type. The card reader and writer 50 may include plural types of devices.

A motion sensor and the like may be provided in the checkout machine 12. The motion sensor may detect that a shopper 4 is near the checkout machine 12.

Next, an operation of the merchandise sales data processing system according to the present embodiment will be described.

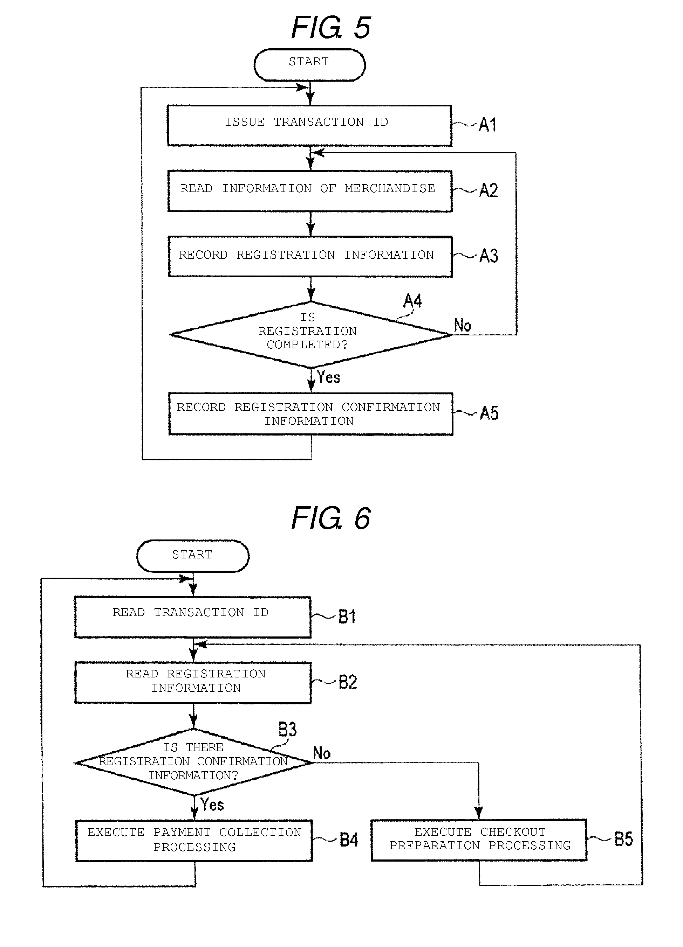

FIG. 5 is a flowchart illustrating an operation of the merchandise registration machine 10 according to the present embodiment. FIG. 6 is a flowchart illustrating an operation of the checkout machine 12 according to the present embodiment.

First, registration processing carried out by the merchandise registration machine 10 will be described with reference to FIG. 5.

If a shopping basket 7 is placed on the counter table 5 by a shopper 4, the checker 2 performs an operation for causing the merchandise registration machine 10 to issue a transaction ID. For example, the checker 2 performs an instruction of issuing a transaction ID by an operation with the keyboard 26 or the touch panel 27.

The issue of a transaction ID may be carried out by one of two methods: a method using a recording medium such as a membership card of the shopper 4 (a first method); and a method of causing the merchandise registration machine 10 to determine the transaction ID without using the recording medium such as a membership card (a second method).

Through the first method, the checker 2 receives, for example, the membership card from the shopper 4, and causes the card reader and writer 30 to read data recorded in the membership card, for example, data indicating a membership number of the shopper 4. The CPU 20 determines a transaction ID based on the data (membership number) read by the card reader and writer 30. For example, as the transaction ID, the membership number may be used, or identification information which is generated so as to include the membership number may be used. Another piece of identification information for enabling unique determination in accordance with a predetermined rule based on the membership number may be generated and the generated identification information may be used as the transaction ID.

When the first method is used, a medium used in the first method is not limited to a medium that electronically stores data, such as a membership card, and a sheet medium on which a code such as a two-dimensional code, characters, or the like which indicate, for example, a membership number of the shopper 4 are printed may be used. When the sheet medium is used, the merchandise registration machine 10 optically reads a code or characters through the scanner 25.

If the transaction ID for the shopper 4 (transaction) is determined based on the data read from the membership card, i.e., through the first method, the CPU 20 issues the determined transaction ID (Act A1). That is, the CPU 20 records the transaction ID in association with registration information, in the registration information list, and causes a screen for notifying the checker 2 of the transaction ID and the issue of the transaction ID, to be displayed on the touch panel 27.

According to the first method, the shopper 4 can cause the checkout machine 12 to read the medium such as the membership card, which was used in issuing the transaction ID, and start the checkout processing on registration information generated through the registration processing carried out by the merchandise registration machine 10.

According to the first method, since the card owned by the shopper 4, such as the membership card, is used for identifying the transaction ID, it is possible to omit printing of a receipt by the merchandise registration machine 10, and also to prompt shoppers 4 to use membership cards for the checkout processing. Further, according to the first method, the card to be used to generate the transaction ID is not limited to the membership card and a rewritable card. If the rewritable card is used, the CPU 20 records data indicating the transaction ID in the card.

The second method may be employed for shoppers 4 who do not own membership cards and the like. In the second method, the checker 2 performs an instruction of issuing a transaction ID without using the membership card and the like, by an operation with the keyboard 26 or the touch panel 27.

The CPU 20 determines a transaction ID of the current transaction, in response to the instruction by the operation of the checker 2. In this case, the CPU 20 generates a transaction ID in accordance with a predetermined algorithm. The algorithm prevents the transaction ID from overlapping with other transaction IDs that are issued by other merchandise registration machines 10.

If the transaction ID for the shopper 4 (transaction) is determined through the second method, the CPU 20 issues the determined transaction ID (Act A1). That is, the CPU 20 records the transaction ID in association with registration information, in the registration information list, and, for example, the CPU 20 generates data of a two-dimensional code indicating the transaction ID and causes the printer 29 to print the generated two-dimensional code on a receipt sheet. The CPU 20 causes a screen for notifying the checker 2 of the transaction ID and the issue of the transaction ID to be displayed on the touch panel 27.

According to the second method, the shopper 4 causes the checkout machine 12 to read a receipt on which a two-dimensional code indicating the transaction ID is printed, and start the checkout processing on registration information generated through the registration processing by the merchandise registration machine 10. A letter such as a number, a sign, or a pattern may be printed as information indicating the transaction ID on a receipt sheet, in addition to the two-dimensional code.

According to the second method, even when a shopper 4 does not hold the membership card and the like, it is possible to enable the shopper 4 to use the merchandise sales data processing apparatus.

In the above-described first and second methods, the transaction ID is issued in response to the operation of the checker 2. Alternatively, the transaction ID may be issued by an operation of the shopper 4. In this case, a touch panel or a keyboard for receiving the operation of the shopper 4 is provided in the merchandise registration machine 10. In addition, a card reader and writer which can read a card such as a membership card by the operation of the shopper 4 is provided in the merchandise registration machine 10.

In this case, when the shopper 4 places the shopping basket 7 on the counter table 5 and the checker 2 operates the merchandise registration machine 10 to starts the registration processing, and then the checkout processing is performed by the checkout machine 12 in accordance with an operation of the shopper 4, the shopper 4 performs an operation with the touch panel or the keyboard, or an operation of causing the card reader and writer to read data. Thus, the CPU 20 executes the processing for issuing a transaction ID in a manner similar to the above descriptions.

In this manner, the shopper 4 can select to have the checkout processing to be performed by the checkout machine 12, in accordance with the operation of the shopper 4. Thus, the checker 2 can immediately start the scan operation for performing the registration processing on the merchandise in the shopping basket 7 placed on the counter table 5, without performing the operation of issuing the transaction ID. Accordingly, it is possible to reduce a time required for performing the registration processing.

In the merchandise sales data processing apparatus according to the present embodiment, as described above, as soon as a transaction ID is issued by the merchandise registration machine 10, the shopper 4 can move to the checkout machine 12 even before the registration processing in the merchandise registration machine 10 is completed, and start the checkout processing. Details of the checkout processing will be described below with reference to FIG. 6.

After the CPU 20 issues the transaction ID, if the scanner 25 reads information (merchandise code) of merchandise by the scan operation of the checker 2 (Act A2), the CPU 20 receives data (merchandise name, set price, and other types of data) relating to the merchandise from the store computer 14. The CPU 20 generates registration information to be subjected to the checkout processing.

The CPU 20 adds registration information (merchandise name, unit price, and the like) relating to the merchandise, which is registered as a purchase target, the subtotal, and the like to a list displayed on the touch panel 27. The CPU 20 transmits the registration information associated with the transaction ID, to the store computer 14, for record in the store computer 14 (Act A3).

The checker 2 repeats the scan operation for each piece of merchandise in the shopping basket 7, in a manner similar to the above descriptions. The CPU 20 generates registration information of each piece of merchandise, and sequentially transmits pieces of registration information to the store computer 14.

If the scan operation for all pieces of merchandise is ended, the checker 2 performs an instruction of completion of the registration operation by an operation with the keyboard 26 or the touch panel 27 (for example, operation with a settlement key). If an instruction of the completion of the registration operation is performed by the checker 2 (Yes in Act A4), the CPU 20 notifies the store computer 14 of the completion of the registration operation for record in the store computer 14.

In the foregoing descriptions, the transaction ID is issued before the scan operation for merchandise (reading operation of merchandise information) is started. However, the transaction ID may be issued after the scan operation is started (before the registration processing is completed). For example, Act A1 in FIG. 5 may be omitted. If an instruction of issuing a transaction ID is performed through an operation of the checker 2 on the keyboard 26 or the touch panel 27 or through reading of the membership card, the CPU 20 issues the transaction ID and associates the transaction ID with the registration information, for record in the store computer 14, in a manner similar to the above descriptions, during Acts A2 to A4.

For example, when there is no other shopper 4 who waits for his turn of the registration processing by the merchandise registration machine 10, if the checker 2 performs the checkout processing using the merchandise registration machine 10, processing may be completed for a shorter time, and it is possible to provide a better service. Thus, the checker 2 may start the scan operation without issuing a transaction ID. At this time, for example, when a shopper 4 requests to perform the checkout processing by himself using the checkout machine 12 or the number of shoppers 4 who wait for their turns of the registration processing by the merchandise registration machine 10 is increased after the scan operation has been started, the transaction ID may be issued. Thus, the shopper 4 can move to the checkout machine 12 and start the checkout processing before the registration processing has been completed.

Next, the checkout processing by the checkout machine 12 will be described (FIG. 6).
Once a transaction ID is issued by the merchandise registration machine 10, the shopper 4 can move to the checkout machine 12 even before the registration processing has been completed, and start the operation to have the checkout processing to be carried out by the checkout machine 12. When the transaction ID is issued through the above-described first method or second method, the shopper 4 may arbitrarily select an unoccupied checkout machine 12 which is not operated by another shopper 4 to start the checkout processing.

When the transaction ID is issued through the first method, the shopper 4 inserts, for example, the membership card which was used in issuing the transaction ID, into the card reader and writer 50, and the shopper 4 causes the card reader and writer 50 to read data recorded in the membership card. That is, for example, the shopper 4 causes data indicating a membership number of the shopper 4 to be read. The CPU 40 determines the transaction ID based on the data (membership number) read by the card reader and writer 50 (Act B1).

If the transaction ID is determined, the CPU 40 causes the transaction ID to be transmitted to the store computer 14, and causes registration information corresponding to the transaction ID to be read by the store computer 14 (Act B2). If the registration information corresponding to the transaction ID is recorded in the store computer 14, the CPU 40 receives the recorded registration information from the store computer 14. The CPU 40 causes information (merchandise name, unit price, subtotal, and the like) relating to merchandise registered as a purchase target to be displayed as a list on the touch panel 46, based on the registration information received from the store computer 14.

The CPU 40 confirms whether registration confirmation information is set in the store computer 14. If the registration confirmation information is not set (if the registration processing is not completed) (No in Act B3), the CPU 40 repeats reading of the registration information from the store computer 14 in a manner similar to the above descriptions (Act B2).

Accordingly, if information of merchandise is read through the scan operation using the merchandise registration machine 10, the checkout machine 12 may immediately receive registration information of the merchandise which was subjected to the scan operation, through the store computer 14. Information relating to the registered merchandise is sequentially displayed in the list on the touch panel 46, according to the registration information received from the store computer 14. Thus, the shopper 4 can confirm a status of the registration processing by the merchandise registration machine 10. For example, the shopper 4 can confirm the registered merchandise, the subtotal, and the like concurrently.

During the time before the registration processing completes, the shopper 4 may perform an operation to perform checkout preparation processing, which is required to perform the checkout processing. The CPU 40 executes the checkout preparation processing in response to the operation of the shopper 4 (Act B5).

For example, when the payment is in cash, the shopper 4 may designate payment in cash as a payment method to the checkout machine 12, and then take coins or a bill from a wallet, and insert the taken coins or bill into the change device 47. Since information of the registered merchandise is displayed on the touch panel 46, the shopper 4 can roughly estimate the total amount, and insert cash for payment into the change device 47 in advance. In this case, the CPU 40 causes coins or bills inserted into the change device 47 to be stored therein, and causes information of the inserted money and the like to be displayed on the touch panel 46.

When the subtotal of the registered merchandise exceeds the inserted money, the CPU 40 may output a message for demanding the shopper 4 of addition of cash (in a manner of display on the touch panel 46, sound from a speaker (not illustrated), or the like).

When the shopper 4 uses a card for the payment, such as a credit card, a debit card, an electronic money card, and a prepaid card, the shopper 4 may designate payment in card as a payment method to the checkout machine 12, and then take out a card to be used in the checkout processing from a wallet, and insert the selected card into the card reader and writer 50 in advance.

When the shopper 4 has a coupon for discount for merchandise, processing for the discount may be performed. For example, when an input operation to be eligible for the discount by the coupon is required, the shopper 4 may perform the input operation based on the information of the registered merchandise which is displayed on the touch panel 46.

In addition, in the checkout machine 12, before the registration processing by the merchandise registration machine 10 has completed, the checkout preparation processing required for the checkout processing may be performed in advance. The above-described details of the checkout preparation processing are only an example and other processing may be executed.

If it is determined that the registration confirmation information is set in the store computer 14 (registration processing is completed) (Yes in Act B3), the CPU 40 executes payment collection processing (Act B4). That is, the CPU 40 calculates the total amount based on the registration information of all pieces of merchandise which have been registered as purchase targets.

For example, when the payment in cash is designated, the CPU 40 subtracts the total amount from the amount of cash inserted in advance, and discharges the change from the change device 47. When payment with a card is designated, the CPU 40 executes the payment collection processing for receiving the total amount from the card. When the coupon processing is performed, the CPU 40 calculates a total amount for merchandise after the discount by the coupon is applied.

When the checkout preparation processing has not ended at a point of time when the registration confirmation information is set (at a point of time when the registration processing is completed), the CPU 40 executes the payment collection processing as soon as the checkout preparation processing is ended.

If the payment collection processing is completed in this manner, the CPU 40 causes the printer 49 to print a receipt, and ends the checkout processing for one transaction (one shopper 4).

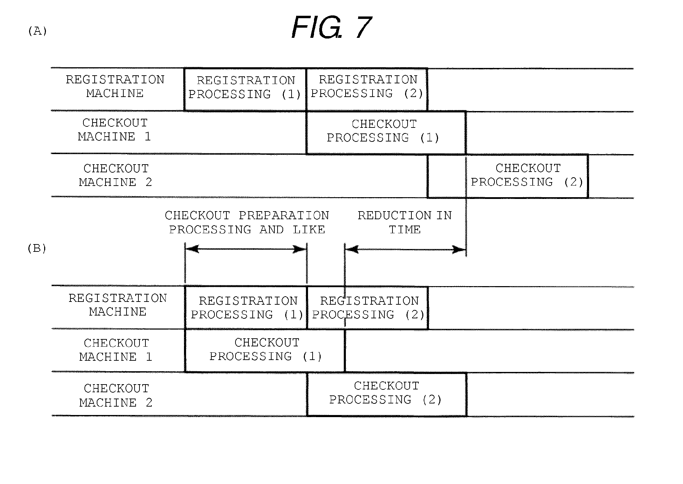

FIG. 7 illustrates a time required for executing the registration processing and the checkout processing in the merchandise sales data processing apparatus according to the present embodiment.

Section (A) of FIG. 7 illustrates a case where the checkout processing is executed after completion of the registration processing by the merchandise registration machine 10.

In section (A) of FIG. 7, registration processing (1) for a first shopper 4 is executed by the merchandise registration machine 10, and the registration processing (1) is completed. After that, checkout processing (1) for registration information registered through the registration processing (1) is executed by the checkout machine 1.

After the registration processing (1) is completed by the merchandise registration machine 10, registration processing (2) for the next shopper 4 is executed. After the registration processing (2) is completed, checkout processing (2) for registration information registered through the registration processing (2) is executed by the checkout machine 2.

As illustrated in section (A) of FIG. 7, when the checkout processing is performed after completion of the registration processing by the merchandise registration machine 10 is performed, the sum of the time required for the registration processing and the time required for the checkout processing is required until completion of the checkout processing is completed.

Section (B) of FIG. 7 illustrates a time required for performing the registration processing and the checkout processing in the merchandise sales data processing apparatus according to the embodiment.

In section (B) of FIG. 7, the registration processing (1) for the first shopper 4 is executed in the merchandise registration machine 10, and the checkout processing (1) is executed in the checkout machine 1 in parallel with the registration processing (1). The checkout machine 1 can start the checkout preparation processing during a time period before the registration processing (1) is completed. Thus, once the registration processing (1) is completed, the payment collection processing is immediately executed, and the checkout processing (1) can be completed earlier.

After the registration processing (1) by the merchandise registration machine 10 is completed, the registration processing (2) for the next shopper 4 is executed. Similarly, the checkout processing (2) can be executed in parallel with the registration processing (2). Specifically the checkout preparation processing may be executed during a time period before the registration processing (2) is completed. Thus, once the registration processing (2) is completed, the payment collection processing is immediately executed, and the checkout processing (2) can be completed earlier.

In this manner, in the merchandise sales data processing apparatus according to the embodiment, a transaction ID is issued before the registration processing by the merchandise registration machine 10 is completed, and thus the shopper 4 can cause the checkout processing (checkout preparation processing) to be performed in the checkout machine 12 in parallel with the registration processing by the merchandise registration machine 10. Accordingly, it is possible to reduce a time period from when the registration processing is started until the checkout processing is completed.

In the foregoing descriptions, the transaction ID is issued by the merchandise registration machine 10, and the transaction ID is read by the checkout machine 12 in accordance with an operation of the shopper 4. However, in some cases the reading operation of the transaction ID by the checkout machine 12 may not be carried out.

In this case, a checker 2 who operates the merchandise registration machine 10 selects a checkout machine 12 which is not currently performing the checkout processing. The checker 2 notifies the shopper 4 of a number and the like assigned to the checkout machine 12, so as to prompt the shopper 4 to use the designated checkout machine 12 for the checkout processing. For example, the store computer 14 monitors operation states of a plurality of checkout machines 12, and determines an checkout machine 12 which is not currently in the process of the checkout processing. The store computer 14 causes an object to be displayed on the touch panel 27 of the merchandise registration machine 10. This object is used for selecting the checkout machine 12 which is not currently in the process of the checkout processing. Basically, the object is displayed such that a checkout machine 12 located near the merchandise registration machine 10 is preferentially selected.

If a certain checkout machine 12 is selected by the operation of the checker 2, the merchandise registration machine 10 notifies the store computer 14 of the selected checkout machine 12. The merchandise registration machine 10 may generate a transaction ID and notify the store computer 14 of the generated transaction ID. Thus, the store computer 14 stores registration information registered through the registration processing by the merchandise registration machine 10. That is, for example, the store computer 14 stores the registration information in association with an ID of (registration number and the like) the merchandise registration machine 10 or a transaction ID received from the merchandise registration machine 10.

The store computer 14 instructs the checkout machine 12 selected by the merchandise registration machine 10 to execute the checkout processing. The checkout machine 12 which is instructed to execute the checkout processing, from the store computer 14 becomes in a standby state for the checkout processing. When the shopper 4 performs a predetermined operation on the touch panel 46 of the checkout machine 12, the checkout machine 12 executes the checkout processing (checkout preparation processing) in parallel with the registration processing by the merchandise registration machine 10, in a manner similar to the above descriptions.

In addition, when a motion sensor and the like detects, for example, that a shopper 4 comes near the checkout machine 12, the checkout machine 12 may start the checkout processing. When the shopper 4 comes near the checkout machine 12, the checkout machine 12 notifies the shopper 4, for example, that a screen indicating that the checkout machine 12 is ready for the checkout processing is displayed in the touch panel 46. Thus, even when a plurality of checkout machines 12 is unoccupied, only the checkout machine 12 selected by the merchandise registration machine 10 responds when a shopper 4 comes near the checkout machines 12. Accordingly, the shopper 4 can easily determine the selected checkout machine 12 for the checkout processing.

In a manner similar to the above descriptions, the checkout machine 12 may receive the registration information registered by the merchandise registration machine 10, through the store computer 14 and execute the checkout processing.

In the foregoing embodiment, the registration information of merchandise which has been subjected to the scan operation in the merchandise registration machine 10 is transmitted to the checkout machine 12 through the store computer 14 each time new merchandise is scanned, and the registration information is sequentially added to a list and displayed. However, another method may be used.

For example, the merchandise registration machine 10 records registration information of each piece of merchandise, which is generated by the scan operation. The merchandise registration machine 10 transmits a collection of pieces of recorded registration information to the store computer 14 when the registration processing is completed. The store computer 14 receives pieces of registration information of all pieces of merchandise, from the merchandise registration machine 10, and then transmits a collection of the pieces of registration information of the all pieces of merchandise, to the checkout machine 12. The checkout machine 12 integrates information of all pieces of merchandise, based on the registration information received from the store computer 14, and displays the integrated pieces of information in a list.

In this manner, registration information of plural pieces of merchandise is collected and the collection is communicated among the merchandise registration machine 10, the store computer 14, and the checkout machine 12. Thus, it is possible to reduce traffic (quantity of data of which communication is performed) of the network 16.

In the foregoing embodiment, the registration information generated by the merchandise registration machine 10 is transmitted to the checkout machine 12 through the store computer 14. Alternatively, the registration information associated with a transaction ID may be transmitted to the checkout machine 12 from the merchandise registration machine 10 without passing through the store computer 14. The registration confirmation information (notification of completion of registration processing) may be also directly transmitted to the checkout machine 12 from the merchandise registration machine 10.

When the transaction ID is not issued, the merchandise registration machine 10 notifies execution of the checkout processing to the checkout machine 12 selected by the operation of a checker 2, before the registration processing is completed. Thus, the checkout machine 12 can start the checkout preparation processing in a manner similar to the above embodiment, before the registration processing is completed.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A checkout system, comprising:
- a register machine including,
a scanner configured to scan a product code on each of one or more products to be purchased in a transaction,
a communication interface, and
a processor configured to control the communication interface to transmit a transaction ID that is based on a customer code read from a medium carried by a customer before transmitting all of one or more product IDs corresponding to one or more scanned product codes; and
- a payment machine separate from the register machine and including,
a code reader configured to read the customer code in the medium, and
a processor configured to start retrieving said one or more product IDs in response to reading of the customer code by the code reader and carry out payment processing based on said one or more product IDs.

2. The checkout system according to claim 1, wherein
the communication interface is configured to transmit the transaction ID and said one or more product IDs to a computer connected to the register machine and the payment machine, such that the transaction ID and said one or more product IDs are stored in the computer in association with each other, and
the processor of the payment machine retrieves said one or more product IDs from the computer.

3. The checkout system according to claim 1 or 2, wherein
the register machine further includes a data writer configured to write the transaction ID in the medium, and
the code reader is further configured to read the transaction ID written in the medium.

4. The checkout system according to any one of claims 1 to 3, wherein
the processor of the register machine is configured to separately transmit each of said one or more product IDs each time a corresponding product code is scanned.

5. The checkout system according to any one of claims 1 to 3, wherein
the processor of the register machine is configured to collectively transmit all of said one or more product IDs.

6. The checkout system according to any one of claims 1 to 5, wherein
the communication interface is configured to transmit the transaction ID before transmitting any of said one or more product IDs.

7. The checkout system according to any one of claims 1 to 6, wherein
the processor of the register machine is further configured to control the communication interface to respond to a command operation from a user by transmitting a signal indicating that all of said one or more product IDs have been transmitted.

8. The checkout system according to any one of claims 1 to 7, wherein
the register machine further includes a display, and
the processor of the register machine is further configured to control the display to respond to issuance of the transaction ID by displaying a message indicating that the transaction ID has been issued.

9. The checkout system according to any one of claims 1 to 8, wherein
the processor of the register machine is further configured to control the communication interface to transmit a signal indicating that all of said one or more product IDs have been transmitted, in response to a command operation by a user.

10. The checkout system according to any one of claims 1 to 9, wherein
the register machine further includes a display, and
the processor of the register machine is further configured to control the display to display a message indicating that the transaction ID has been issued, in response to issue of the transaction ID.

11. The checkout system according to any one of claims 1 to 10, further comprising a printer, wherein
the processor configured to control the communication interface comprises controlling the printer to print a transaction code of the transaction on a sheet;
the code reader configured to read the customer code in the medium comprises reading the transaction code on the sheet; and
the processor configures to start retrieving said one or more products IDs in response to reading of the customer code comprises reading of the transaction code.

12. The checkout system according to claim 11, wherein the transaction ID comprises
the transaction code.

13. A checkout system comprising:
a register machine; and
a plurality of payment machines, each of which is configured to carry out payment processing, wherein
the register machine includes
a scanner configured to scan a product code on each of one or more products to be purchased in a transaction, and
a processor configured to select a payment machine in response to issue of a transaction ID of the transaction, and to cause the transaction ID to be transmitted to the selected payment machine, before all of one or more product IDs corresponding to one or more scanned product codes are transmitted to the selected payment machine.

14. The checkout system according to claim 13, wherein
the processor is configured to select the payment machine based on a user selection thereof.

15. The checkout system according to claim 13 or 14, wherein
each of said one or more product IDs is configured to be separately transmitted each time a corresponding product code is scanned.

16. The checkout system according to claim 13 or 14, wherein
all of said one or more product IDs are configured to be correctively transmitted.

17. The checkout system according to any one of claims 13 to 16, wherein
the transaction ID is configured to be transmitted before any of said one or more product IDs is transmitted.
